(19) Europäisches Patentamt
European Patent Office
Office européen des brevets

(11) EP 4 335 881 A1

(12) EUROPEAN PATENT APPLICATION

(43) Date of publication:
13.03.2024 Bulletin 2024/11

(21) Application number: 22194951.4

(22) Date of filing: 09.09.2022

(51) International Patent Classification (IPC):
*C08F 110/06* (2006.01) *C08L 23/12* (2006.01)

(52) Cooperative Patent Classification (CPC):
(C-Sets available)
**C08L 23/12; C08F 110/06;** C08F 4/65912; C08F 4/65916; C08L 2207/10; C08L 2314/06

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **CARMELI, Enrico**
  **4021 Linz (AT)**
- **HOFF, Matthias**
  **4021 Linz (AT)**
- **KETTNER, Joana Elvira**
  **4021 Linz (AT)**
- **WANG, Jingbo**
  **4021 4021 (AT)**
- **GAHLEITNER, Markus**
  **4021 Linz (AT)**
- **BERNREITNER, Klaus**
  **4021 Linz (AT)**

(74) Representative: **Dehns**
**St. Bride's House**
**10 Salisbury Square**
**London EC4Y 8JD (GB)**

# (54) POLYPROPYLENE COMPOSITION

(57) The invention relates to a polypropylene composition having a melt flow rate ($MFR_2$) of 1 to 100 g/10 min when measured according to ISO 1133 at 230 °C under a load of 2.16 kg, said composition comprising:
a) 80 to 96 wt.-%, based on the total weight of the polypropylene composition, of a single-site catalyst (SSC) based high isotacticity polypropylene having an $MFR_2$ of 1 to 100 g/10 min according to ISO 1133 at 230 °C under a load of 2.16 kg and a melting temperature ($T_m$) as determined by differential scanning calorimetry (DSC) in the range 148 to 160 °C, wherein said high isotacticity polypropylene is
(i) a polypropylene homopolymer; or
(ii) a random propylene copolymer of propylene and at least one comonomer selected from ethylene and $C_4$-$C_{10}$ alpha-olefins, wherein said at least one comonomer is present in an amount of up to 0.5 wt.-%, relative to the total weight of the copolymer; and

b) 4 to 20 wt.-%, relative to the total weight of the polypropylene composition, of a single-site catalyst (SSC) based low isotacticity polypropylene homopolymer having a melting temperature ($T_m$) in the range 135 to 147 °C as determined by differential scanning calorimetry (DSC) and a xylene cold solubles (XCS) content according to ISO 16152 in the range of 2 to 10 wt.-%, relative to the total weight of the low isotacticity propylene homopolymer.

EP 4 335 881 A1

(52) Cooperative Patent Classification (CPC): (Cont.)

C-Sets
**C08F 110/06, C08F 4/6492;**
**C08F 110/06, C08F 4/65927;**
**C08L 23/12, C08L 23/12;**
C08F 110/06, C08F 2500/33, C08F 2500/34, C08F 2500/12, C08F 2500/15, C08F 2500/35, C08F 2500/03;
C08F 110/06, C08F 2500/33, C08F 2500/34, C08F 2500/12, C08F 2500/15, C08F 2500/35, C08F 2500/39

## Description

### Field of the Invention

The present invention relates to a polypropylene composition. More specifically, the invention relates to a polypropylene composition comprising a combination of two polypropylenes (PP) produced using a single site catalyst (SSC), in particular a high isotacticity SSC-PP and a low isotacticity SSC-PP. The invention further relates to an article comprising the polypropylene composition and the use of the low isotacticity SSC-PP of the propylene composition described herein for improving the mechanical properties of a polypropylene composition.

### Background

Polypropylene (PP) is one of the most used plastics for packaging applications. However, polypropylene is generally known to change in mechanical performance over time after processing, with a gradual increase in stiffness and reduction in toughness being observed as a result of a combination of physical ageing and post-crystallisation. This process can alter toughness and ductility especially for PP homopolymers to a critical extent, as known from the effects of steam sterilisation or pasteurisation. These changes to mechanical properties can be even more pronounced where the polypropylene is subjected to radiation-based sterilisation processes, like $\gamma$-irradiation, where chemical degradation often also takes place.

In a continuously increasing part of the polypropylene market, especially in the pharmaceutical area, but also in food packaging and especially in medical applications (syringes, pouches, tubes etc.), the material is sterilised by either heat (steam), radiation ($\beta$ / electrons or $\gamma$) or chemicals (mostly ethylene oxide), which affects the mechanical and optical properties. Among all these, the sterilisation via $\gamma$-radiation is the most relevant method for sterilising pharmaceutical, medical or diagnostic items. It is well known that radiation, mostly the ionising effect of $\gamma$-rays, induces chain scission and degradation effects, resulting in a reduced melt viscosity and severe embrittlement. What makes this radical reaction so critical is the fact that it continues for a long time after the actual sterilisation process, making long-term studies necessary for studying the effects. Various strategies have been published for combatting the effects of sterilisation. Some focus on the use of "mobilizing agents" (paraffinic oils) and special stabilizer formulations. Others combine the polypropylene with specific polyethylene qualities or other polymers, for example EP 0847420, JP 4808419 and KR 2005053937.

However, an area which has received less attention is how to tackle the effects of sterilisation together with the issues of normal physical ageing and post-crystallisation. Modifiers which are effective in minimising the changes resulting from both these sources combined are therefore of interest. Ideally, such components should change the initial properties of the polypropylene as little as possible, should not migrate and be non-toxic.

The present inventors have sought new polypropylene compositions, developed in particular for the health care and medical market, which possess improved aging resistance both with and without being exposed to sterilisation processes by $\gamma$-irradiation.

The present inventors have surprisingly found that a polypropylene composition comprising two polypropylenes (PP) produced using a single site catalyst (SSC), in particular a high isotacticity SSC-PP and a low isotacticity SSC-PP, offers an attractive solution. In particular, these polypropylene compositions possess good aging resistance in terms of ductility retention, as measured by the relative strain at break after a particular time period. Significantly, this effect is also was observed after sterilisation.

### Summary of the Invention

Thus, viewed from a first aspect, the invention provides a polypropylene composition having a melt flow rate ($MFR_2$) of 1 to 100 g/10 min when measured according to ISO 1133 at 230 °C under a load of 2.16 kg, said composition comprising:

a) 80 to 96 wt.-%, based on the total weight of the polypropylene composition, of a single-site catalyst (SSC) based high isotacticity polypropylene having an $MFR_2$ according to ISO 1133 at 230 °C under a load of 2.16 kg of 1 to 100 g/10 min and a melting temperature ($T_m$) as determined by differential scanning calorimetry (DSC) in the range 148 to 160 °C, wherein said high isotacticity polypropylene is

(i) a polypropylene homopolymer; or

(ii) a random propylene copolymer of propylene and at least one comonomer selected from ethylene and $C_4$-$C_{10}$ alpha-olefins, wherein said at least one comonomer is present in an amount of up to 0.5 wt.-%, relative to the

total weight of the copolymer; and

b) 4 to 20 wt.-%, relative to the total weight of the polypropylene composition, of a single-site catalyst (SSC) based low isotacticity polypropylene homopolymer having a melting temperature ($T_m$) in the range 135 to 147 °C as determined by differential scanning calorimetry (DSC) and a xylene cold solubles (XCS) content according to ISO 16152 in the range of 2 to 10 wt.-%, relative to the total weight of the low isotacticity propylene homopolymer.

Viewed from another aspect, the invention provides an article comprising the polypropylene composition as hereinbefore defined.

Viewed from a further aspect, the invention provides the use of a single site catalyst based low isotacticity polypropylene homopolymer as hereinbefore defined for increasing ductility retention, measured in terms of the relative strain at break after 7 days, of a polypropylene composition as hereinbefore defined.

**Definitions**

The term "polypropylene" will be understood to mean a propylene based polymer, i.e. one comprising at least 50 wt.-% propylene, based on the total weight of the polymer as a whole. The term "polypropylene" and "propylene polymer" mean the same thing and may be used interchangeably.

The term "gamma sterilisable" within the context of the invention means that the polymer is capable of being sterilised via the use of $\gamma$-radiation. The person skilled in the art will be familiar with gamma sterilisation techniques. Gamma sterilisation is typically carried out at a dose in the range of 15 to 150 kGy.

The term "random copolymer" has to be preferably understood according to IUPAC (Pure Appl. Chem., Vol. No. 68, 8, pp. 1591 to 1595, 1996). The random copolymers encompassed by the present invention have a comonomer content of less than or equal to 0.5 wt.-%, relative to the total weight of the copolymer.

The term "high isotacticity" is intended herein to mean that the polypropylene possesses a high level of isotacticity. It is known in the art that isotacticity is a measure of the stereoregularity at the chiral centres in the propylene monomer units. In the context of the present invention, the degree of isotacticity is provided by way of a measure of the pentad regularity <mmmm> fraction, and by "high isotacticity" we mean having an <mmmm> fraction of at least 95 mol-%, as determined by $^{13}$C-NMR spectroscopy.

The term "low isotacticity" is intended herein to mean that the polypropylene possesses a low level of isotacticity. It is known in the art that isotacticity is a measure of the stereoregularity at the chiral centres in the propylene monomer units. In the context of the present invention, the degree of isotacticity is provided by way of a measure of the pentad regularity <mmmm> fraction, and by "low isotacticity" we mean having an <mmmm> fraction of maximum 90 mol-%, as determined by $^{13}$C-NMR spectroscopy.

**Detailed Description**

The present invention relates to a polypropylene composition comprising two components: a high isotacticity polypropylene and a low isotacticity polypropylene. It will be understood that these two polypropylenes are different.

**High Isotacticity Polypropylene**

The high isotacticity polypropylene may be (i) a polypropylene homopolymer; or (ii) a random propylene copolymer of propylene and at least one comonomer selected from ethylene and $C_4$-$C_{10}$ alpha-olefins, wherein said at least one comonomer is present in an amount of up to 0.5 wt.-%, relative to the total weight of the copolymer.

In one embodiment (i), the high isotaticity polypropylene is a polypropylene homopolymer. According to the present invention, the expression "polypropylene homopolymer", relates to a polypropylene that consists substantially, i.e. of at least 99.5 mol-%, more preferably of at least 99.6 mol-%, still more preferably of at least 99.7 mol-%, like of at least 99.9 mol-%, of propylene units. In another embodiment only propylene units are detectable, i.e. only propylene has been polymerised. The definition "propylene homopolymer" has a well-known meaning in the art.

In an alternative embodiment (ii), the high isotacticity polypropylene is a random propylene copolymer of propylene and at least one comonomer selected from ethylene and $C_4$-$C_{10}$ alpha-olefins. In a preferable embodiment the at least one comonomer is selected from ethylene and $C_4$ to $C_8$ alpha-olefins, more preferably from ethylene and butene. Most preferably the at least one comonomer is ethylene. Whilst it is within the ambit of the invention for the copolymer to comprise more than one comonomer, such as a mixture of two or more comonomers, it is preferred if only a single comonomer is present.

In this embodiment, the at least one comonomer is present in an amount of up to 0.5 wt.-%, relative to the total weight of the copolymer. Typical comonomer amounts are therefore in the range of 0.05 to 0.5 wt.-%, preferably 0.1 to

0.4 wt.-%, such as 0.15 to 0.3 wt.-%, relative to the total weight of the copolymer. Where more than one comonomer is present, it will be understood that these amounts relate to the total amount of all comonomers present.

The high isotacticity polypropylene is a single-site catalyst (SSC) based polypropylene, meaning that it is prepared in the presence of a single site catalyst. The term "single site catalyst" is well known in the art. Furthermore, the skilled person will appreciate that a polymer prepared using a single site catalyst will have differing properties to one prepared using an alternative catalyst, such as a Ziegler-Natta or chromium catalyst.

The high isotacticity polypropylene is thus obtained by polymerisation with a single site catalyst, which is preferably a metallocene catalyst. The polymerisation method used may be any suitable known polymerisation process in the art.

Polypropylenes prepared by using a metallocene provide a different microstructure compared to polypropylenes prepared by using Ziegler-Natta (ZN) catalysts. The most significant difference is the presence of regio-defects in metallocene-made polypropylenes. These regio-defects can be of three different types, namely 2,1-erythro (2, 1e), 2,1-threo (2, 1t) and 3,1 defects. A detailed description of the structure and mechanism of formation of regio-defects in polypropylene can be found in Chemical Reviews 2000, 100(4), pages 1316-1327.

Accordingly, the term "regio-defects" herein defines the sum of 2,1 erythro regio-defects, 2,1 threo regio-defects and 3,1 regio-defects. Consequently, the amount of defects, i.e. regio-defects, like 2,1 regio-defects, i.e. 2,1 erythro regio-defects and 2,1 threo regio-defects, and 3,1 regio-defects, is indicated by "mol-%" of the average percentage of propylene units in the polymer chain.

In a preferred embodiment, the high isotacticity polypropylene has [2,1]-regio-defects in the range 0.3 to 1.5 mol-%, preferably from 0.4 to 1.4 mol-%, and most preferably from 0.5 to 1.3 mol-% as determined by $^{13}C$-NMR spectroscopy. The presence of such amount of regio-defects is a sufficient (although not a mandatory) feature to unambiguously identify a polypropylene as produced with a metallocene catalyst instead of a Ziegler-Natta-type catalyst.

The high isotacticty polypropylene is characterised by a high isotacticity, which is hereinbefore defined. Preferably, the high isotacticity polypropylene has a pentad regularity <mmmm> of 95 to 99.9 mol-%, preferably of 96.0 to 99.5 mol-%, most preferably 96.5 to 99.0 mol-%, as determined by $^{13}C$-NMR spectroscopy.

The metallocene catalyst is in particular defined by the formula (I):

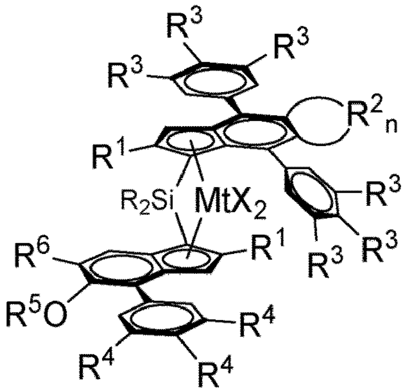

Formula (I)

In a complex of formula (I) it is preferred if Mt is Zr or Hf, preferably Zr; each X is a sigma ligand. Most preferably, each X is independently a hydrogen atom, a halogen atom, $C_1$-$C_6$ alkoxy group or an R' group, where R' is a $C_1$-$C_6$ alkyl, phenyl or benzyl group. Most preferably, X is chlorine, benzyl or a methyl group. Preferably, both X groups are the same. The most preferred options are two chlorides, two methyl or two benzyl groups, especially two chlorides. For further preferred definitions of the residues, reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1 -yl][2-methyl-4-(3',5'-dimethyl-phenyl)-5-methoxy-6-tert-butylinden-1 -yl] zirconium dichloride (MC-1);
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1 -yl] zirconium dichloride (MC-2);
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride (MC-3)

The corresponding zirconium dimethyl analogues of the above defined three catalysts are also possible but less preferred. The most preferred catalyst is the one used for the inventive examples, i.e. MC-2.

Cocatalyst

To form an active catalytic species it is normally necessary to employ a cocatalyst as is well known in the art. Here, a cocatalyst system comprising a boron containing cocatalyst and an aluminoxane cocatalyst is typically used in combination with the above defined metallocene catalyst complex.

Typical aluminoxane cocatalysts are state of the art. The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

As mentioned above the aluminoxane cocatalyst is used in combination with a boron containing cocatalyst.

Boron based cocatalysts of interest include those of formula (Z)

$$BY_3 \qquad (Z)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine.

Preferred examples for Y are methyl, propyl, isopropyl, isobutyl or trifluoromethyl, unsaturated groups such as aryl or haloaryl like phenyl, toluyl, benzyl groups, p-fluorophenyl, 3,5-difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5- difluorophenyl)borane, tris(4-fluoromethylphenyl)borane, tris(2,4,6-trifluorophenyl)borane, tris(pentafluorophenyl)borane, tris(tolyl)borane, tris(3,5-dimethyl-phenyl)borane, tris(3,5-difluorophenyl)borane and/or tris (3,4,5-trifluorophenyl)borane. Particular preference is given to tris(pentafluorophenyl)borane.

Preferred ionic compounds which can be used include:

triethylammoniumtetra(phenyl)borate, tributylammoniumtetra(phenyl)borate,
trimethylammoniumtetra(tolyl)borate, tributylammoniumtetra(tolyl)borate,
tributylammoniumtetra(pentafluorophenyl)borate,
tripropylammoniumtetra(dimethylphenyl)borate,
tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate,
di(cyclohexyl)ammoniumtetrakist(pentafluorophenyl)borate,
triphenylphosphoniumtetrakis(phenyl)borate, triethylphosphoniumtetrakis(phenyl)borate, diphenylphosphoniumtetrakis(phenyl)borate,
tri(methylphenyl)phosphoniumtetrakis(phenyl)borate,
tri(dimethylphenyl)phosphoniumtetrakis(phenyl)borate,
triphenylcarbeniumtetrakis(pentafluorophenyl)borate, or
ferroceniumtetrakis(pentafluorophenyl)borate.

Preference is given to triphenylcarbeniumtetrakis(pentafluorophenyl) borate, N,N-dimethylcyclohexylammoniumtetrakis(pentafluorophenyl)borate or N,N-dimethylbenzylammoniumtetrakis(pentafluorophenyl)borate. Certain boron cocatalysts are especially preferred. Preferred borates comprise the trityl ion. Thus, the use of N,N-dimethylammoniumtetrakispentafluorophenylborate and $Ph_3CB(PhF_5)_4$ and analogues therefore are especially favoured.

Especially preferred is the combination of a borate cocatalyst, like Trityl tetrakis(pentafluorophenyl) borate, and methylaluminoxane (MAO).

Suitable amounts of cocatalyst will be well known to the skilled man.

The molar ratio of boron to the metal ion of the metallocene may be in the range of 0.5:1 to 10:1 mol/mol, preferably in the range of 1:1 to 10:1, especially in the range of 1:1 to 5:1 mol/mol.

The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

The melt flow rate $MFR_2$ (230 °C, 2.16 kg) determined according to ISO 1133 of the high isotacticity polypropylene is in the range from 1 to 100 g/10 min, preferably in the range of 1.5 to 20 g/10min, still more preferably in the range of 2.0 to 15 g/10 min.

It is further preferred that the high isotacticity polypropylene is featured by rather low cold xylene solubles (XCS) content, i.e. by a xylene cold solubles (XCS) below 2.0 wt.-%, determined according to ISO 16152. Accordingly, the high isotacticity polypropylene has preferably a xylene cold solubles (XCS) content in the range of 0.1 to 1.9 wt.-%, more preferably in the range of 0.2 to 1.7 wt.-%, still more preferably in the range of 0.3 to 1.5 wt.-%.

The amount of xylene cold solubles (XCS) additionally indicates that the high isotacticity polypropylene is preferably free of any elastomeric polymer component, like an ethylene propylene rubber. In other words, the high isotacticity polypropylene is not a heterophasic polypropylene, i.e. a system consisting of a polypropylene matrix in which an elastomeric phase is dispersed. Such systems are featured by a rather high xylene cold soluble content. In other words, the high isotacticity polypropylene is a monophasic polypropylene. Further, the high isotacticity polypropylene is preferably a crystalline propylene polymer. The term "crystalline" indicates that the high isotacticity polypropylene has a relatively high melting temperature. In particular, the high isotacticity polypropylene has a melting temperature $T_m$ in the range from 148 to 160 °C, preferably in the range from 150 to 159 °C, more preferably in the range from 152 to 158 °C as measured by differential scanning calorimetry (DSC) according to ISO 11357.

Generally, the high isotacticity polypropylene of the invention has a crystallization temperature ($T_c$) of 105 to 120 °C, preferably in the range of from 100 to 119 °C, more preferably in the range of 110 to 118 °C. The crystallisation temperature ($T_c$) is measured by DSC according to ISO 11357/3.

Generally, the high isotacticity polypropylene of the invention has a heat of melting ($H_m$) of 90 to 110 J/g, preferably in the range of from 92 to 108 J/g, more preferably in the range of 95 to 105 J/g. The heat of melting (Hm) is measured by DSC according to ISO 11357/3.

The weight average molecular weight (Mw) of the high isotacticity polypropylene is typically in the range 80 to 400 kg/mol, preferably 150 to 380 kg/mol, such as 200 to 350 kg/mol.

In another preferred embodiment, the high isotacticity polypropylene has a molecular weight distribution (Mw/Mn) in the range from 2.5 to 4.5, more preferably from 2.7 to 4.2, and even more preferably from 2.8 to 4.0, as determined by GPC according to ISO 16014.

The high isotacticity polypropylene may contain suitable additives as known in the art. According to this invention, the additives of the high isotacticity polypropylene may be any of those described below in the context of the composition as a whole.

The high isotacticity polypropylene is present in an amount of 80 to 96 wt.-%, based on the total weight of the polypropylene composition. Preferably, the high isotacticity polypropylene is present in an amount of 82 to 95 wt.-%, relative to the total weight of the polypropylene composition.

**Low Isotacticity Polypropylene**

The low isotacticity polypropylene is a polypropylene homopolymer. According to the present invention, the expression "polypropylene homopolymer", relates to a polypropylene that consists substantially, i.e. of at least 99.5 mol-%, more preferably of at least 99.6 mol-%, still more preferably of at least 99.7 mol-%, like of at least 99.9 mol-%, of propylene units. In another embodiment only propylene units are detectable, i.e. only propylene has been polymerised. The definition "propylene homopolymer" has a well-known meaning in the art.

The low isotacticity polypropylene homopolymer is a single-site catalyst (SSC) based polypropylene, meaning that it is prepared in the presence of a single site catalyst. The term "single site catalyst" is well known in the art. Furthermore, the skilled person will appreciate that a polymer prepared using a single site catalyst will have differing properties to one prepared using an alternative catalyst, such as a Ziegler-Natta or chromium catalyst.

The low isotacticity polypropylene is thus obtained by polymerisation with a single site catalyst, which is preferably a metallocene catalyst. The polymerisation method used may be any suitable known polymerisation process in the art.

Polypropylenes prepared by using a metallocene provide a different microstructure compared to polypropylenes prepared by using Ziegler-Natta (ZN) catalysts. The most significant difference is the presence of regio-defects in metallocene-made polypropylenes. These regio-defects can be of three different types, namely 2,1-erythro (2, 1e), 2,1-threo (2, 1t) and 3,1 defects. A detailed description of the structure and mechanism of formation of regio-defects in polypropylene can be found in Chemical Reviews 2000, 100(4), pages 1316-1327.

Accordingly, the term "regio-defects" herein defines the sum of 2,1 erythro regio-defects, 2,1 threo regio-defects and 3,1 regio-defects. Consequently, the amount of defects, i.e. regio-defects, like 2,1 regio-defects, i.e. 2,1 erythro regio-defects and 2,1 threo regio-defects, and 3,1 regio-defects, is indicated by "mol-%" of the average percentage of propylene units in the polymer chain.

In a preferred embodiment, the low isotacticity polypropylene homopolymer has [2,1]-regio-defects in the range 0.01 to 1.0 mol-%, preferably from 0.02 to 0.8 mol-%, even more preferably from 0.03 to 0.5 mol-%, and most preferably from 0.05 to 0.2 mol-%, as determined by $^{13}C$-NMR spectroscopy. The presence of such an amount of regio-defects is a sufficient (although not a mandatory) feature to unambiguously identify a polypropylene as produced with a metallocene catalyst instead of a Ziegler-Natta-type catalyst.

The metallocene catalyst complexes used to prepare the low isotacticity polypropylene homopolymer comprise a metallocene complex and a cocatalyst. The metallocene compound or complex is referred herein also as organometallic compound (C). The organometallic compound (C) comprises a transition metal (M) of Group 3 to 10 of the Periodic

Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In the metallocene catalyst complexes used to prepare the low isotacticity polypropylene homopolymer, the following preferences apply:

Complexes may have the structure of formula (II):

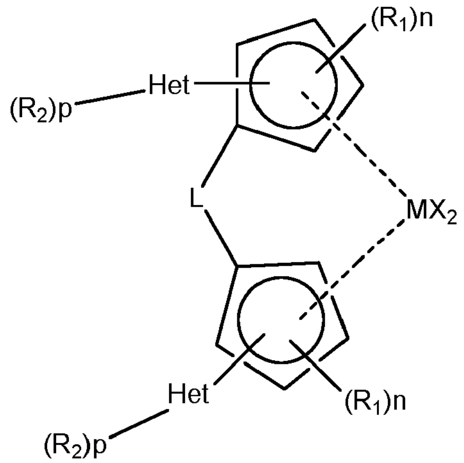

(II)

wherein each X is independently a halogen atom, a $C_{1-6}$-alkyl group, $C_{1-6}$-alkoxy group, phenyl or benzyl group;

each Het is independently a monocyclic or multicyclic heteroaromatic or heterocyclic group containing at least one heteroatom selected from O or S;

L is -$R'_2$Si-, wherein each R' is independently $C_{1-20}$-hydrocarbyl or $C_{1-10}$-alkyl substituted with alkoxy having 1 to 10 carbon atoms;

M is Ti, Zr or Hf;

each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or - $Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (II) has the structure (II'):

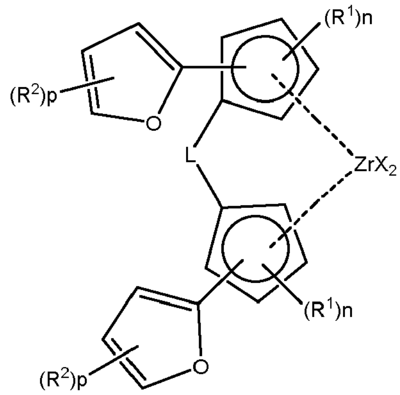

(II´)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (II) are

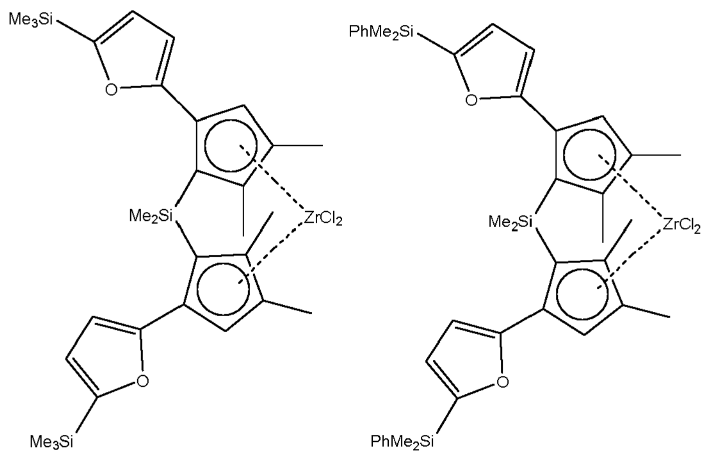

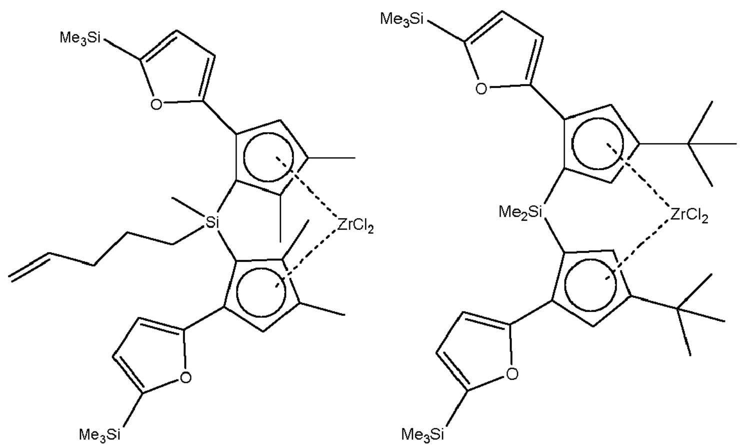

Most preferably the complex dimethylsilanediylbis[2-(5-trimethylsilylfuran-2-yl)-4,5-dimethylcyclopentadien-1-yl] zirconium dichloride is used.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

The low isotacticity polypropylene homopolymer is characterised by a low isotacticity, which term is hereinbefore defined. Preferably, the low isotacticity polypropylene homopolymer has a pentad regularity <mmmm> of 75 to 90 mol-%, preferably of 80 to 89 mol-%, most preferably 82 to 88 mol-%, as determined by $^{13}C$-NMR spectroscopy.

The melt flow rate $MFR_2$ (230 °C, 2.16 kg) determined according to ISO 1133 of the low isotacticity polypropylene homopolymer is typically in the range from 1 to 100 g/10 min, preferably in the range of 10 to 80 g/10min, still more preferably in the range of 20 to 60 g/10 min.

The low isotacticity polypropylene homopolymer is featured by a moderate amount of cold xylene solubles (XCS) content, and indeed it is a requirement that this component has a xylene cold solubles (XCS) content in the range 2 to 10 wt.-% according to ISO 16152, relative to the total weight of the low isotacticity polypropylene homopolymer. Accordingly, the low isotacticity polypropylene homopolymer has preferably a xylene cold solubles (XCS) content in the range of to 2.5 to 9.0 wt.-%, more preferably in the range of to 3.0 to 8.5 wt.-%, still more preferably in the range of 4.0 to 8.0 wt.-%.

The amount of xylene cold solubles (XCS) additionally indicates that the low isotacticity polypropylene homopolymer is preferably free of any elastomeric polymer component, like an ethylene propylene rubber. In other words, the low isotacticity polypropylene homopolymer is preferably not a heterophasic polypropylene, i.e. a system consisting of a polypropylene matrix in which an elastomeric phase is dispersed. Such systems are featured by a rather high xylene cold soluble content. In other words, the low isotacticity polypropylene is a monophasic polypropylene. Further, the low isotacticity polypropylene is preferably a crystalline propylene polymer. The term "crystalline" indicates that the low isotacticity polypropylene has a relatively high melting temperature. In particular, the low isotacticity polypropylene has a melting temperature ($T_m$) in the range from 135 to 147 °C, preferably in the range from 136 to 145 °C, more preferably in the range from 138 to 142 °C as measured by differential scanning calorimetry (DSC) according to ISO 11357.

Generally, the low isotacticity polypropylene homopolymer of the invention has a crystallization temperature ($T_c$) of 90 to 110 °C, preferably in the range of from 92 to 108 °C, more preferably in the range of 95 to 105 °C. The crystallisation temperature ($T_c$) is measured by DSC according to ISO 11357/3.

Generally, the low isotacticity polypropylene homopolymer of the invention has a heat of melting ($H_m$) of 70 to 90 J/g, preferably in the range of from 72 to 88 J/g, more preferably in the range of 75 to 85 J/g. The heat of melting ($H_m$) is measured by DSC according to ISO 11357/3.

The weight average molecular weight (Mw) of the low isotacticity polypropylene homopolymer is typically in the range 80 to 300 kg/mol, preferably 100 to 250 kg/mol, such as 120 to 200 kg/mol.

In another preferred embodiment, the low isotacticity polypropylene homopolymer has a molecular weight distribution (Mw/Mn) in the range from 2.5 to 4.5, more preferably from 2.6 to 4.0, and even more preferably from 2.7 to 3.5, as determined by GPC according to ISO 16014.

The low isotacticity polypropylene homopolymer may contain suitable additives as known in the art. According to this invention, the additives of the low isotacticity polypropylene may be any of those described below in the context of the composition as a whole.

The low isotacticity polypropylene homopolymer is present in an amount of 4 to 20 wt.-%, based on the total weight of the polypropylene composition. Preferably, the low isotacticity polypropylene is present in an amount of 5 to 15 wt.-%, relative to the total weight of the polypropylene composition.

**Polypropylene Composition**

The polypropylene composition is characterised by having a melt flow rate ($MFR_2$) of 1 to 100 g/10 min when measured according to ISO 1133 at 230 °C under a load of 2.16 kg. Preferably the $MFR_2$ of the polypropylene composition is in the range 1.5 to 50 g/10 min, more preferably 2.0 to 40 g/10min, such as 2.5 to 30 g/10 min.

Generally, the polypropylene composition of the invention has a haze value of 30 to 70 %, preferably of from 40% to 65%, more preferably of from 50% to 60%. The haze value is measured according to ASTM D1003 on injection moulded plaques having 1 mm thickness produced as described in EN ISO 1873-2.

Generally, the polypropylene composition of the invention has a melting temperature ($T_m$) of 145 to 160 °C, such as 148 to 158 °C, preferably in the range of from 150 to 156 °C. The melting temperature ($T_m$) is measured by DSC according to ISO 11357/3.

Generally, the polypropylene composition of the invention has a crystallization temperature ($T_c$) of 90 to 120 °C, preferably in the range of from 100 to 119 °C, more preferably in the range of 110 to 118 °C. The crystallisation temperature ($T_c$) is measured by DSC according to ISO 11357/3.

Generally, the polypropylene composition of the invention has a heat of melting ($H_m$) of 80 to 105 J/g, preferably in the range of from 85 to 103 J/g, more preferably in the range of 90 to 100 J/g. The heat of melting ($H_m$) is measured by DSC according to ISO 11357/3.

Generally, the polypropylene composition of the invention has a relative strain at break, as determined in a tensile test according to ISO 527-2 on injection moulded specimens, of at least 70%, when measured after 7 days. More preferably, the relative strain at break under these conditions is in the range 70 to 99 %, such as 80 to 99%.

Furthermore, the polypropylene composition of the invention ideally has a relative strain at break after exposure to $\gamma$-radiation with an intensity of 50 kGy, as determined in a tensile test according to ISO 527-2 on injection moulded specimens, of at least 10%, when measured after 7 days. More preferably, the relative strain at break under these conditions is in the range 10 to 60 %, such as 11 to 50 %.

Whilst it is within the ambit of the invention for the polypropylene composition to comprise further polymers in addition to the high isotacticity polypropylene and the low isotacticity polypropylene, it is preferred if the high isotacticity polypropylene and the low isotacticity polypropylene are the sole polymer components in the polypropylene composition. It will be appreciated that the polymer composition may further contain standard polymer additives (which may be part of a masterbatch).

Examples of additives include, but are not limited to, stabilizers such as antioxidants (for example sterically hindered phenols, phosphites/phosphonites, alkyl radical scavengers, aromatic amines, or blends thereof), metal deactivators (for example Irganox ® MD 1024), or UV stabilizers. Other typical additives are modifiers such as antistatic or antifogging agents (for example ethoxylated amines and amides or glycerol esters), acid scavengers (for example Ca-stearate), blowing agents, cling agents (for example polyisobutene), lubricants and resins (for example ionomer waxes, polyethylene- and ethylene copolymer waxes, Fischer Tropsch waxes, montan-based waxes, fluoro-based compounds, or paraffin waxes), as well as slip and antiblocking agents (for example erucamide, oleamide, talc, natural silica and synthetic silica or zeolites) and mixtures thereof.

Generally, the total amount of additives is in the range of 0.1 to 5.0 wt.-%, preferably in the range of 0.1 to 2.0 wt.-%, more preferably in the range of 0.1 to 1.5 wt.-%. The amount of additives is relative to the total amount of polypropylene composition.

In one particular embodiment, the polypropylene composition comprises a UV stabilizer.

The polypropylene composition of the invention is typically prepared by extruding the high isotacticity polypropylene in the presence of the low isotacticity polypropylene, together with any other optional components.

At the end of the extruder, a polypropylene composition melt is obtained. The inventive polypropylene composition melt might then be passed through a die in the optional die zone of the extruder. When the inventive polypropylene composition melt is passed through the die it is generally further cooled down and pelletized.

The die zone typically comprises a die plate, which is generally a thick metal disk having multiple holes. The holes are parallel to the screw axis.

The pelletizer is generally a strand pelletizer or an underwater pelletizer.

## Applications

The present invention also provides an article comprising the polypropylene composition of the invention. Suitable articles are films, like for example cast films, and injection moulded articles. One preferred injection moulded article is an element of a packaging system, like a closure cap, a screw cap or a closure system for food or fluid packaging. Another preferred injection moulded article is a medical article, like an element of a diagnosis system or a syringe.

Use

The present invention further pertains to a use of the SSC catalyzed low isotacticity propylene homopolymer of the propylene composition described hereinabove for increasing ductility retention, measured in terms of the relative strain at break after 7 days.

The invention will now be described with reference to the following non-limiting examples.

**Figure 1:** Ductility retention of inventive and comparative compositions after γ-irradiation with an intensity of 50 kGy in annealing at 80°C (values for 1 & 8 weeks)

**Figure 2:** Ductility retention of inventive and comparative compositions in annealing at 80°C (values for 1 & 8 weeks)

## EXAMPLES

## Determination methods

### Melt Flow Rate

The melt flow rate (MFR) is determined according to ISO 1133 and is indicated in g/10min. The MFR is an indication of the flowability and hence the processability of the polymer. The higher the melt flow rate, the lower the viscosity of the polymer. The $MFR_2$ of polypropylene is determined at a temperature of 230 °C and under a load of 2.16 kg.

### Quantification of microstructure by NMR spectroscopy

Quantitative nuclear-magnetic resonance (NMR) spectroscopy was used to quantify the isotacticity and regio-regularity of the polymers.

Quantitative $^{13}C$ {$^{1}H$} NMR spectra were recorded in the solution-state using a Broker Advance III 400 NMR spectrometer operating at 400.15 and 100.62 MHz for H and13 C respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-d2 (TCE-d2) along with chromium-(III)- acetylacetonate (Cr(acac)3) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This

setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G.,Vacatello, M., Segre, A.L., Macromoleucles 30 (1997) 6251). Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253). The amount of 2, 1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\text{ mol-}\% = 100 * (P_{21e} / P_{total})$$

For copolymers characteristic signals corresponding to the incorporation of ethylene were observed (Cheng, H. N., Macromolecules 17 (1984), 1950).

With regio-defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

**Number average molecular weight (Mn), weight average molecular weight (Mw ) and molecular weight distribution (MWD)**

Molecular weight averages (Mw, Mn), and the molecular weight distribution (MWD), i.e. the Mw/Mn (wherein Mn is the number average molecular weight and Mw is the weight average molecular weight), were determined by Gel Permeation Chromatography (GPC) according to ISO 16014-4:2003 and ASTM D 6474-99.

**DSC analysis**

The melting temperature ($T_m$) and the crystallisation temperature ($T_c$), as well as the heat of melting ($H_m$) are measured with a TA Instrument Q200 differential scanning calorimetry device (DSC) according to ISO 11357/part 3/method C2 on 5 to 10 mg samples, under 50mL/min of nitrogen atmosphere. Crystallisation and melting temperatures were obtained in a heat/cool/heat cycle with a scan rate of 10 °C/min between -30 °C and 225 °C. Crystallisation and melting temperatures were taken as the peaks of the endotherms and exotherms in the cooling step and the second heating step respectively.

**Xylene soluble content (XCS, wt.-%)**

The content of the polymer soluble in xylene is determined according to ISO 16152; 5th edition; 2005-07-01 at 25°C.

**Tensile tests**

Tensile properties (yield stress, tensile modulus and strain at break) were measured according to ISO 527-2 (cross head speed = 1 mm/min for modulus range; test speed 50 mm/min for higher strain; at 23 °C) using injection moulded specimens 1A prepared as described in EN ISO 1873-2 (dog bone shape, 4 mm thickness). The first measurement was done after 96 h conditioning time at 23 °C of the specimen.

**Haze**

Haze is determined according to ASTM D1003 on injection moulded plaques having 1 mm thickness and 60x60 $mm^2$ area produced as described in EN ISO 1873-2.

**Comonomer content**

***Poly(propylene-co-ethylene) - ethylene content by IR spectroscopy***

Quantitative infrared (IR) spectroscopy was used to quantify the ethylene content of the poly(ethylene-co-propene) copolymers through calibration to a primary method.

Calibration was facilitated through the use of a set of in-house non-commercial calibration standards of known ethylene contents determined by quantitative $^{13}C$ solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt.-% produced at either pilot or full scale under a variety of conditions. The calibration set was selected to reflect the typical variety of copolymers encountered by the final quantitative IR spectroscopy method.

Quantitative IR spectra were recorded in the solid-state using a Bruker Vertex 70 FTIR spectrometer. Spectra were recorded on 25x25 mm square films of 300 um thickness prepared by compression moulding at 180 - 210°C and 4 - 6 mPa. For samples with very high ethylene contents (>50 mol-%) 100 um thick films were used. Standard transmission FTIR spectroscopy was employed using a spectral range of 5000-500 $cm^{-1}$, an aperture of 6 mm, a spectral resolution of 2 $cm^{-1}$, 16 background scans, 16 spectrum scans, an interferogram zero filling factor of 64 and Blackmann-Harris 3-term apodisation. Quantitative analysis was undertaken using the total area of the $CH_2$ rocking deformations at 730 and 720 $cm^{-1}$ ($A_Q$) corresponding to $(CH_2)_{>2}$ structural units (integration method G, limits 762 and 694 $cm^{-1}$). The quantitative band was normalised to the area of the CH band at 4323 $cm^{-1}$ ($A_R$) corresponding to CH structural units (integration method G, limits 4650, 4007 $cm^{-1}$). The ethylene content in units of weight percent was then predicted from the normalised absorption ($A_Q$ / $A_R$) using a quadratic calibration curve. The calibration curve having previously been constructed by ordinary least squares (OLS) regression of the normalised absorptions and primary comonomer contents measured on the calibration set.

***Poly(propylene-co-ethylene) - ethylene content for calibration using*** **$^{13}$C** ***NMR spectroscopy***

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-$d_2$ (TCE-$d_2$) along with chromium (III) acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: $fE = ( E / ( P + E )$ The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to $E = 0.5( S\beta\beta + S\beta\gamma + S\beta\delta + 0.5( S\alpha\beta + Say))$ Through the use of this set of sites the corresponding integral equation becomes $E = 0.5( I_H +I_G + 0.5( Ic + ID))$ using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: $E [mol\text{-}\%] = 100 * fE$. The weight percent comonomer incorporation was calculated from the mole fraction: $E [wt.\text{-}\%] = 100 * (fE * 28.06 ) / ((fE * 28.06) + ((1-fE) * 42.08))$.

**Gamma sterilisation**

Injection moulded test specimens 1A prepared as described in EN ISO 1873-2 (dog bone shape, 4 mm thickness) were exposed to gamma-ray irradiation at 50 kGy using a 60Co γ-ray source. Consecutively the samples were aged at 80°C in a circulating air oven up to 60 days as indicated below, at the same time also aging non-irradiated samples in parallel. Once the desired time was reached, the samples were taken out from the oven and aged at 23 °C for 24 hours before the tensile test according to ISO 527-2 was performed.

**Inventive and comparative examples**

The following materials were used:
**Single site catalyst based high isotacticity polypropylene homopolymer (SSC_PP):** SSC-PPH based on CAT-A ($MFR_2$ 3.5 g/10 min, $T_m$ 155 °C, $T_c$ 116 °C and $H_m$ 100 J/g). The polymer has a pentad isotacticity of 97.5 mol-% and a [2,1] regiodefect content of 0.6 mol-%, an XCS content of 0.4 wt.-%, a weight average molecular weight (Mw) of 324 kg/mol and a molecular weight distribution (MWD) of 3.2. The polymerisation and catalyst details are provided below.

**Ziegler-Natta catalyst based high isotacticity polypropylene homopolymer (ZN_PP):** ZNC-PPH HC001A-B1 ($MFR_2$ 3.3 g/10min, $T_m$ 163 °C and $T_c$ 116 °C) is a commercially available polypropylene homopolymer from Borealis A/S. The polymer has a pentad isotacticity of 93.1 mol-% and no detectable regio-defects, it has an XCS content of 2.5 wt.-%.

**Single site catalyst based low isotacticity polypropylene (PP)**

SSC-PPH based on CAT-B (pentad isotacticity 86.3 mol-%, [2,1] regio-defects 0.08 mol-%, $T_m$ 139 °C, $T_c$ 101 °C, $H_m$ 84 J/g, $MFR_2$ 43 g/10min). The polymer had a weight average molecular weight (Mw) of 149 kg/mol and a molecular weight distribution (MWD) of 2.9; it has an XCS content of 8.0 wt.-%. The polymerisation details are provided

below.

All the polymer compositions of the inventive and comparative examples were stabilised with 2000 ppm poly (4-hydroxy-2,2,6,6-tetramethyl-1-piperidineethanol-alt-1,4-butanedioic acid), commercially available as Tinuvin 622 m (supplied by BASF AG, DE; CAS No. 65447-77-0) as UV stabiliser, 1000 ppm tris(2,4-di-tert.-butylphenyl) phosphite, commercially available as Irgafos 168 (supplied by BASF AG, DE; CAS No. 31570-04-4) as antioxidant and 500 ppm Calcium stearate (CAS No. 1592-23-0) as acid scavenger.

Preparation of catalyst

**CAT-A**

*Catalyst complex*

The following metallocene complex has been used as described in WO 2019/179959:

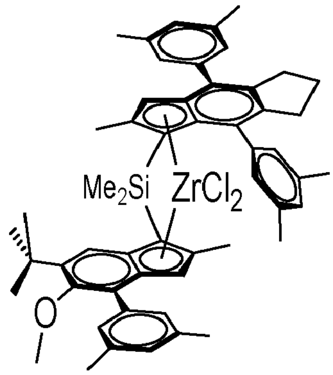

*Preparation of MAO-silica support*

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60°C under nitrogen flow for 2 hours and then for 5 hours under vacuum (-0.5 barg) with stirring. MAO treated support was collected as a free-flowing white powder found to contain 12.2% Al by weight.

*Catalyst system preparation*

30 wt.-% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2 h and additionally for 5 h under vacuum (-0.5 barg) under stirring stirring.

Dried catalyst was sampled in the form of pink free flowing powder containing 13.9% Al and 0.11% Zr.

**CAT-B**

*Loading* of *SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt.-% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

Polymerisation

The polymerisations were done in a stirred autoclave with a volume of 21.2 $dm^3$. The evacuated autoclave was filled with 5400 g propylene. 0.25 - 0.50 mmol triethylaluminium (0.6 mol/l solution in heptane) were added using a stream of 250 g propylene. The solution was stirred at 25 °C for at least 20 min. Then, 6.7 mmol of hydrogen were fed using a flow controller. 1050 - 1150 mg of catalyst were weighed into a steel vial inside a glove box and suspended in 3 ml n-heptane. The vial was attached to the polymerisation autoclave and the catalyst was flushed into the reactor with additional 350 g propylene.

For prepolymerisation, the reactor was stirred for 10 min. at 25 °C. Then the reactor temperature was raised to the bulk temperature of 80 °C. When the temperature exceeded 78 °C, additional 15.6 mmol of hydrogen were added with a flow meter and the timing for the bulk polymerisation was started. After 240 min. polymerisation time, the reactor was flashed to ambient pressure, purged two times with nitrogen and evacuated in order to remove residual hydrocarbons.

**Results**

Two inventive and four comparative examples were prepared. Table 1 shows the compositions of the tested examples.

Table 1

| Example | ZN_PP | SSC_PP | PP | Acid scavenger | Antioxidant | UV stabiliser |
|---|---|---|---|---|---|---|
| | wt.-% | wt.-% | wt.-% | wt.-% | wt.-% | wt.-% |
| CE1 | 99.65 | 0 | 0 | 0.05 | 0.1 | 0.2 |
| CE2 | 94.65 | 0 | 5 | 0.05 | 0.1 | 0.2 |
| CE3 | 84.65 | 0 | 15 | 0.05 | 0.1 | 0.2 |
| CE4 | 0 | 99.65 | 0 | 0.05 | 0.1 | 0.2 |
| IE1 | 0 | 94.65 | 5 | 0.05 | 0.1 | 0.2 |
| IE2 | 0 | 84.65 | 15 | 0.05 | 0.1 | 0.2 |

All compositions were injection moulded into tensile test specimens and subjected to two kinds of ageing test up to 8 weeks (1344 h), using a roughly logarithmic selection of testing times as before:

- Annealing at 80°C without prior irradiation
- Annealing at 80°C after $\gamma$-irradiation with an intensity of 50 kGy

The γ-irradiation was performed by routine methods.

Table 2 summarizes the basic properties and the relative change of tensile modulus (TM), yield stress (YS) and strain at break (SB).

Impact retention is judged in this case via ductility, i.e. by the relative strain at break (SB rel.). As Figures 1 and 2 show, an improvement over ZNC-PPH based compositions is observed in both cases, with and without radiation. While the improvement after γ-irradiation was not as good as expected, it is still better than for the compositions based on the ZNC-PPH. In pure annealing, ductility retention is clearly improved.

Table 2

| | Radiation | $MFR_2$ (g/ 10 min) | $T_m$ (°C) | $H_m$ (J/g) | $T_c$ (°C) | Haze (%) | TM rel. @ 168 h (%) | YS rel. @ 168 h (%) | SB rel. @ 168 h (%) | TM rel. @ 1344 h (%) | YS rel. @ 1344 h (%) | SB rel. @ 1344 h (%) |
|---|---|---|---|---|---|---|---|---|---|---|---|---|
| CE1 | 50KGY | 3.3 | 162.9 | 102.1 | 118.3 | 46.3 | 108 | 105.0 | 10 | 112 | 106.0 | 9 |
| CE2 | 50KGY | 3.43 | 161.1 | 103.9 | 116.2 | 45.4 | 107 | 105.0 | 7 | 113 | 106.0 | 6 |
| CE3 | 50KGY | 4.5 | 160.9 | 102.4 | 115.2 | 43.1 | 105 | 105.0 | 6 | 111 | 107.0 | 5 |
| CE4 | 50KGY | 3.5 | 154.8 | 99.5 | 115.7 | 58.3 | 110 | 108.0 | 26 | 117 | 111.0 | 6 |
| IE1 | 50KGY | 3.7 | 155.3 | 97.2 | 114.5 | 57.3 | 108 | 107.0 | 11 | 114 | 110.0 | 5 |
| IE2 | 50KGY | 4.9 | 153.8 | 96.7 | 114.3 | 54.8 | 110 | 111.0 | 21 | 115 | 113.0 | 6 |
| | | | | | | | | | | | | |
| CE1 | OKGY | 3.3 | 162.9 | 102.1 | 118.3 | 46.3 | 102 | 103.0 | 66 | 106 | 102.0 | 53 |
| CE2 | OKGY | 3.43 | 161.1 | 103.9 | 116.2 | 45.4 | 102 | 103.0 | 52 | 104 | 103.0 | 51 |
| CE3 | OKGY | 4.5 | 160.9 | 102.4 | 115.2 | 43.1 | 100 | 103.0 | 56 | 103 | 103.0 | 52 |
| CE4 | OKGY | 3.5 | 154.8 | 99.5 | 115.7 | 58.3 | 103 | 106.0 | 85 | 104 | 105.0 | 81 |
| IE1 | OKGY | 3.7 | 155.3 | 97.2 | 114.5 | 57.3 | 102 | 106.0 | 88 | 104 | 105.0 | 77 |
| IE2 | OKGY | 4.9 | 153.8 | 96.7 | 114.3 | 54.8 | 103 | 108.0 | 99 | 106 | 107.0 | 81 |

## Claims

**1.** A polypropylene composition having a melt flow rate ($MFR_2$) of 1 to 100 g/10 min when measured according to ISO 1133 at 230 °C under a load of 2.16 kg, said composition comprising:

a) 80 to 96 wt.-%, based on the total weight of the polypropylene composition, of a single-site catalyst (SSC) based high isotacticity polypropylene having an $MFR_2$ of 1 to 100 g/10 min according to ISO 1133 at 230 °C under a load of 2.16 kg and a melting temperature ($T_m$) as determined by differential scanning calorimetry (DSC) in the range 148 to 160 °C, wherein said high isotacticity polypropylene is

(i) a polypropylene homopolymer; or
(ii) a random propylene copolymer of propylene and at least one comonomer selected from ethylene and $C_4$-$C_{10}$ alpha-olefins, wherein said at least one comonomer is present in an amount of up to 0.5 wt.-%, relative to the total weight of the copolymer; and

b) 4 to 20 wt.-%, relative to the total weight of the polypropylene composition, of a single-site catalyst (SSC) based low isotacticity polypropylene homopolymer having a melting temperature ($T_m$) in the range 135 to 147 °C as determined by differential scanning calorimetry (DSC) and a xylene cold solubles (XCS) content according to ISO 16152 in the range of 2 to 10 wt.-%, relative to the total weight of the low isotacticity propylene homopolymer.

**2.** A polypropylene composition as claimed in claim 1, wherein

a) the high isotacticity polypropylene has a pentad regularity [mmmm] of 95 to 99.9 mol-%, as determined by $^{13}C$-NMR spectroscopy; and/or
b) the low isotacticity polypropylene homopoloymer has a pentad regularity [mmmm] of 75 to 90 mol-%, as determined by $^{13}C$-NMR spectroscopy.

**3.** A polypropylene composition as claimed in any of claim 1 or 2, wherein the single site catalyst is a metallocene catalyst.

**4.** A polypropylene composition as claimed in any of claims 1 to 3, wherein the high isotacticity polypropylene has an XCS content according to ISO 16152 in the range of less than 2.0 wt.-%.

**5.** A polypropylene composition as claimed in any of claims 1 to 4, wherein

a) the high isotacticity polypropylene has [2,1]-regio-defects in the range 0.3 to 1.5 mol-% as determined by $^{13}C$-NMR spectroscopy; and/or
b) the low isotacticity polypropylene homopolymer has [2,1]-regio-defects in the range 0.01 to 1.00 mol-% as determined by $^{13}C$-NMR spectroscopy.

**6.** A polypropylene composition as claimed in any of claims 1 to 5, wherein

a) the high isotacticity polypropylene is present in an amount of 82 to 95 wt.-%, relative to the total weight of the polypropylene composition; and/or
b) the low isotacticity polypropylene homopolymer is present in an amount of 5 to 15 wt.-%, relative to the total weight of the polypropylene composition.

**7.** A polypropylene composition as claimed in any of claims 1 to 6, wherein said composition has a melt flow rate ($MFR_2$) according to ISO 1133 at 230 °C under a load of 2.16 kg of 1.5 to 50 g/10 min, preferably 2.0 to 40 g/10 min, more preferably 2.5 to 30 g/10 min.

**8.** A polypropylene composition as claimed in any of claims 1 to 7, wherein

a) the high isotacticity polypropylene has a melt flow rate ($MFR_2$) according to ISO 1133 at 230 °C under a load of 2.16 kg of 1.5 to 20 g/10 min, more preferably of 2.0 to 15 g/10 min; and/or
b) the low isotacticity polypropylene homopolymer has a melt flow rate ($MFR_2$) according to ISO 1133 at 230 °C under a load of 2.16 kg of 1 to 100 g/10 min, more preferably of 10 to 80 g/10 min and most preferably of 20 to 60 g/10 min.

**9.** A polypropylene composition as claimed in any of claims 1 to 8, wherein said composition has a melting temperature ($T_m$) as determined by differential scanning calorimetry (DSC) of 145 to 160 °C.

**10.** A polypropylene composition as claimed in any of claims 1 to 9, wherein

a) the high isotacticity polypropylene has a melting temperature ($T_m$) as determined by differential scanning calorimetry (DSC) of 150 to 159 °C, preferably 152 to 158 °C; and/or
b) the low isotacticity polypropylene homopolymer has a melting temperature ($T_m$) as determined by differential scanning calorimetry (DSC) of 136 to 145 °C, preferably 138 to 142 °C.

**11.** A polypropylene composition as claimed in any of claims 1 to 10, wherein said composition has a relative strain at break as determined in a tensile test according to ISO 527-2 on injection moulded specimens of at least 70%, when measured after 7 days.

**12.** A polypropylene composition as claimed in any of claims 1 to 11, wherein said composition has, after sterilisation by $\gamma$-radiation with an intensity of 50 kGy, a relative strain at break as determined in a tensile test according to ISO 527-2 on injection moulded specimens of at least 10%, when measured after 7 days.

**13.** An article comprising the polypropylene composition according to any one of claims 1 to 12, wherein the article is preferably a cast film, an injection moulded article, such as a medical article, a closure cap, a screw cap or a closure system for food or fluid packaging.

**14.** Use of single site catalyst low isotacticity polypropylene homopolymer as defined in any of claims 1 to 12 for increasing ductility retention, measured in terms of the relative strain at break after 7 days according to ISO 527-2, of a polypropylene composition as defined in any of claims 1 to 12.

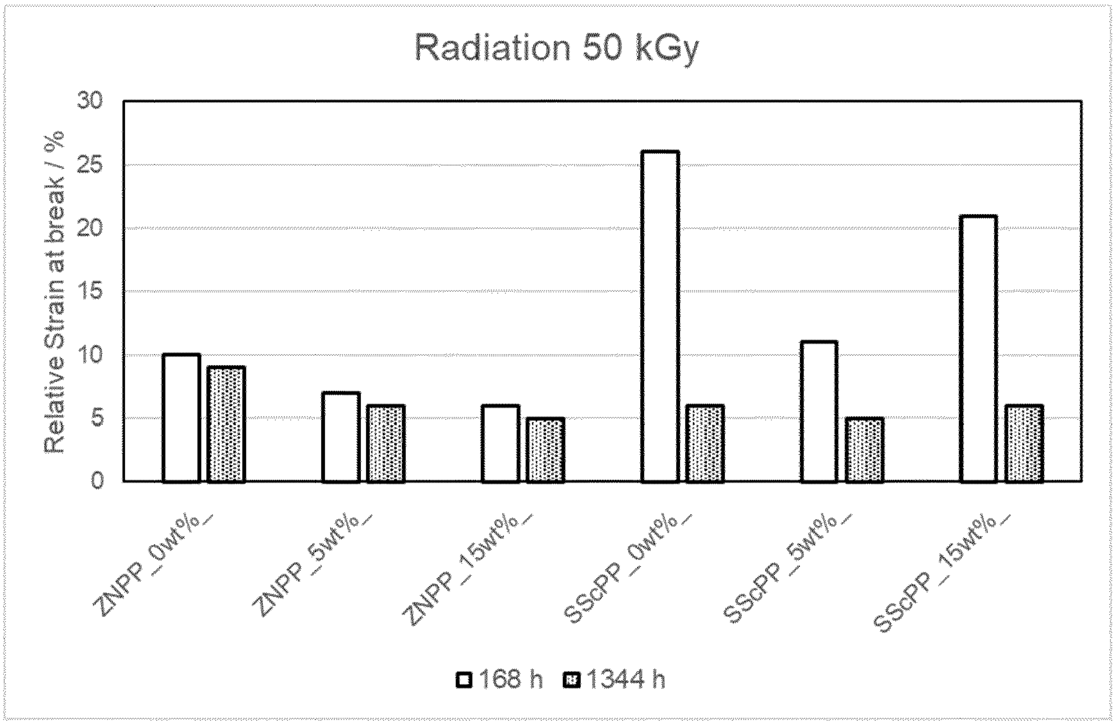
Radiation 50 kGy
Relative Strain at break / %
30
25
20
15
10
5
0
ZNPP_0wt%_
ZNPP_5wt%_
ZNPP_15wt%_
SScPP_0wt%_
SScPP_5wt%_
SScPP_15wt%_
168 h
1344 h

FIG 1

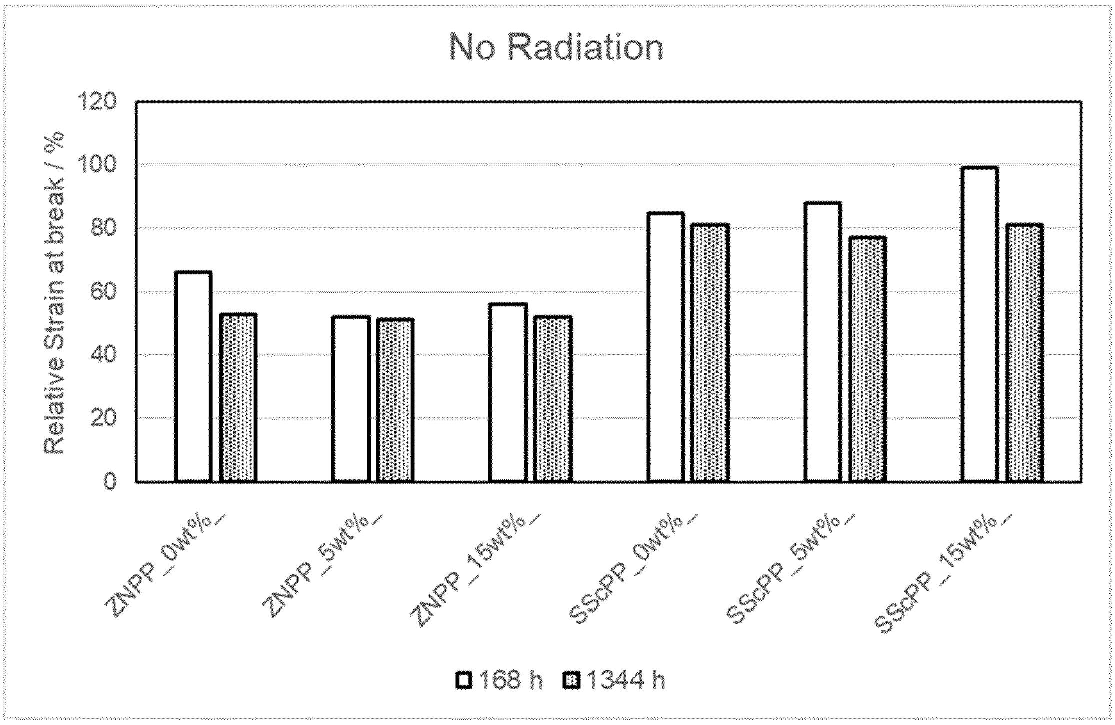
No Radiation
Relative Strain at break / %
120
100
80
60
40
20
0
ZNPP_0wt%_
ZNPP_5wt%_
ZNPP_15wt%_
SScPP_0wt%_
SScPP_5wt%_
SScPP_15wt%_
168 h
1344 h

FIG 2

Europäisches Patentamt
European Patent Office
Office européen des brevets

# EUROPEAN SEARCH REPORT

Application Number
EP 22 19 4951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 925 988 A1 (LG CHEMICAL LTD [KR]) 22 December 2021 (2021-12-22) * paragraph [0009] * * paragraph [0112] - paragraph [0123] * * examples * * claim 1 * ----- | 1-14 | INV. C08F110/06 C08L23/12 |
| Y | WO 2020/089268 A1 (BOREALIS AG [AT]) 7 May 2020 (2020-05-07) * page 1, line 1 - line 18 * * page 2, line 1 - line 2 * * page 19; table 6 * * claim 1 * ----- | 1-14 | |
| A | FINIZIA AURIEMMA ET AL: "Tailoring the Mechanical Properties of Isotactic Polypropylene by Blending Samples with Different Stereoregularity", MACROMOLECULES, AMERICAN CHEMICAL SOCIETY, US, vol. 44, no. 15, 9 August 2011 (2011-08-09), pages 6026-6038, XP001564721, ISSN: 0024-9297, DOI: 10.1021/MA201420F [retrieved on 2011-07-14] * the whole document * ----- | 1-14 | TECHNICAL FIELDS SEARCHED (IPC) C08F C08L |
| A | US 2017/233566 A1 (DATTA SUDHIN [US] ET AL) 17 August 2017 (2017-08-17) * the whole document * ----- | 1-14 | |

The present search report has been drawn up for all claims

1

| Place of search | Date of completion of the search | Examiner |
|---|---|---|
| Munich | 31 January 2023 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 19 4951

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2023

| Patent document cited in search report | Publication date | Patent family member(s) | Publication date |
|---|---|---|---|
| EP 3925988 A1 | 22-12-2021 | CN 113631594 A | 09-11-2021 |
| | | EP 3925988 A1 | 22-12-2021 |
| | | KR 20210020831 A | 24-02-2021 |
| WO 2020089268 A1 | 07-05-2020 | EP 3873983 A1 | 08-09-2021 |
| | | WO 2020089268 A1 | 07-05-2020 |
| US 2017233566 A1 | 17-08-2017 | CN 107075203 A | 18-08-2017 |
| | | EP 3201269 A1 | 09-08-2017 |
| | | US 2017233566 A1 | 17-08-2017 |
| | | WO 2016053467 A1 | 07-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0847420 A
- JP 4808419 B
- KR 2005053937
- WO 2019179959 A


### Non-patent literature cited in the description


- *Pure Appl. Chem.,* 1996, vol. 68 (8), 1591-1595
- *Chemical Reviews,* 2000, vol. 100 (4), 1316-1327
- **ZHOU, Z. ; KUEMMERLE, R. ; QIU, X. ; REDWINE, D. ; CONG, R. ; TAHA, A. ; BAUGH, D. WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- ISO 16152. 01 July 2005
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- *CHEMICAL ABSTRACTS,* 65447-77-0
- *CHEMICAL ABSTRACTS,* 31570-04-4
- *CHEMICAL ABSTRACTS,* 1592-23-0